(19) Europäisches Patentamt / European Patent Office / Office européen des brevets

(11) **EP 2 821 455 A2**

(12) **EUROPEAN PATENT APPLICATION**

(43) Date of publication:
    **07.01.2015 Bulletin 2015/02**

(51) Int Cl.:
    **C09K 5/04** (2006.01)

(21) Application number: **14177037.0**

(22) Date of filing: **06.10.2009**

(84) Designated Contracting States:
    **AT BE BG CH CY CZ DE DK EE ES FI FR GB GR HR HU IE IS IT LI LT LU LV MC MK MT NL NO PL PT RO SE SI SK SM TR**

(62) Document number(s) of the earlier application(s) in accordance with Art. 76 EPC:
    **12006556.0 / 2 543 713**
    **09172381.7 / 2 308 941**

(71) Applicant: **Honeywell International Inc.**
    **Morristown, NJ 07960 (US)**

(72) Inventor: **Spatz, Mark W.**
    **Morristown NJ 07962 (US)**

(74) Representative: **Hucker, Charlotte Jane et al**
    **Kilburn & Strode LLP**
    **20 Red Lion Street**
    **London**
    **WC1R 4PJ (GB)**

Remarks:
    This application was filed on 15-07-2014 as a divisional application to the application mentioned under INID code 62.

(54) **Process for producing refrigeration in low temperature refrigeration systems**

(57)     A composition suitable for use in an existing or new moderate or low refrigeration temperature systems designed to operate with, or suitable for use with, or capable of being used with HCFC-22 as the refrigerant, the composition comprising difluoromethane (HFC-32), pentafluoroethane (HFC-125) and tetrafluoroethane (HFC134a), the three components being present in the composition in amounts such that the operating characteristic of the refrigerant composition in regard to superheat is provided at an acceptable level and the operating characteristics of the refrigerant composition in regard to cooling capacity, mass flow and efficiency (COP) characteristics, when employed as the refrigerant in a low temperature refrigeration system, are each at least 95% of the operating characteristics of chlorodifluoromethane (HCFC-22) if HCFC-22 were to be employed as the refrigerant in such low temperature refrigeration system.

FIG. 1

EP 2 821 455 A2

**Description**

Field of the Invention

This invention relates to refrigerant compositions for replacement of ozone-depleting refrigerant chlorodifluoromethane (HCFC-22 or R-22) for heating and cooling applications, especially in low temperature refrigerant systems, and to a process for retrofitting a low temperature refrigerant system containing HCFC-22 refrigerant with a refrigerant composition without the necessity for any significant modification of the refrigerant systems components or lubricants, yet still being able to obtain at least about 90%, preferably at least about 95%, of the operating characteristics of the R-22 composition in such refrigerant systems. The invention also relates to a process for using such R-22 replacement refrigerant compositions in other systems capable of using R-22 refrigerant compositions such as newly designed systems.

Background to the Invention

Mechanical refrigeration systems, and related heat transfer devices such as heat pumps and air conditioners, using refrigerant liquids are well known in the art for industrial, commercial and domestic uses. Chlorofluorocarbons (CFCs) were developed in the 1930s as refrigerants for such systems. However, since the 1980s the effect of CFCs on the stratospheric ozone layer has become the focus of much attention. In 1987 a number of governments signed the Montreal Protocol to protect the global environment setting forth a timetable for phasing out the CFC products. CFC's were replaced with more environmentally acceptable materials that contain hydrogen or hydrochlorofluorocarbons (HCFC's). Subsequent amendments to the Montreal protocol accelerated the phase-out of these CFCs and also scheduled the phase-out of HCFCs. Thus, there is a requirement for a non-flammable, non-toxic alternative to replace these CFCs and HCFCs. In response to such demand industry has developed a number of hydrofluorocarbons (HFCs), which have a zero ozone depletion potential.

The importance of refrigeration systems, especially low temperature refrigeration systems, to the food manufacture, distribution and retail industries is fundamental. Such systems play a vital role in ensuring that food which reaches the consumer is both fresh and fit to eat. In such low temperature refrigeration systems the popular refrigerant employed has been chlorodifluoromethane (R-22 or HCFC-22), which has an ozone-depleting potential and will be phased out completely.

A number of patent publications have suggested replacements for HCFC-22. That is, these patent publications have suggested refrigerants or refrigerant compositions that can be used instead of HCFC-22 in new refrigeration systems to be built or installed. Among such patent publications there may be mentioned US Patent Nos. US 5,185,094, US 5,370,811, US 5,438,849, US 5,643,492, US 5,709,092, US 5,722,256, US 6,018,952, US 6,187,219 B1, US 6,606,868 B1, U 6,669,862 B1, published US application no. US 2004/00691091 A1, and published European application nos. EP 0 430169 A1, EP 0 509 673 A1 and EP 0 811 670 A1. While all the mentioned US patents and published EP applications disclose ternary mixtures of difluoromethane (HFC-32), pentafluoroethane (HFC-125) and tetrafluoroethane (HFC134a) for use in refrigeration or air conditioning systems, they do not address the ability to replace HCFC-22 in existing R-22 refrigeration systems or systems suitable for use with R-22 refrigerant, particularly in low temperature refrigeration systems, while obtaining at least about 90%, preferably at least about 95%, of the operating characteristics of R-22 without the necessity for modification of the system, especially without the necessity for adjustment or replacement of the expansion valve of the low temperature refrigeration system. Comparative examples provided later in the present specification of this application show that tertiary compositions within the scope of the prior art disclosure are not suitable for use in low temperature R-22 refrigeration systems. Those prior art compositions do not obtain at least about 90% of the operating characteristics of R-22 so as to enable one to use such compositions in low temperature R-22 refrigeration systems over a wide range of low refrigeration temperatures and ambient temperatures without the necessity for modification of the system.

US Patent No. 6,526,764 discloses refrigerant compositions that are soluble in a solubilising agent selected from butane, isobutene, pentane, dimethyl ether and mixtures thereof. These refrigerant compositions are stated to be useful as R-22 retrofit compositions. However, the R-22 retrofit compositions disclosed in this document are only disclosed as suitable for R-22 retrofit high temperature refrigeration systems such as air conditioning systems (see Examples 2-7). The document neither discloses nor contemplates retrofitting of R-22 for low temperature refrigeration i.e., refrigeration that maintains an evaporator temperature of below 32°F.

Replacement of R-22 in low temperature refrigeration conditions is completely different and comprises a completely different set of conditions and problems than retrofit of R-22 in high temperature refrigeration, such as in air conditioning systems. Refrigerant compositions that have acceptable performance characteristics at high evaporation temperature (e.g. air conditioning) systems will not necessarily have adequate or acceptable performance characteristics in low evaporation temperature systems. Refrigeration capacity may fall off and expansion valves may not operate satisfactorily. This is generally due to lower vapor pressure and lower density of the refrigerant composition vapor at the suction point of the compressor of the refrigeration system. For example, a composition whose performance is acceptable in high evaporation temperature systems (e.g. air conditioning systems) may have a significant drop-off in refrigeration capacity and the expansion valves may unacceptably allow liquid to pass through the compressor due to the refrigeration composition having a steeper slope of vapor pressure *versus* temperature than R-22.

In order to retrofit an existing low temperature refrigeration system employing HCFC-22 refrigerant with a replacement refrigerant, it is necessary that that the operating characteristics of the replacement refrigerant, such as evaporator superheat, cooling capacity, refrigerant mass flow rate, efficiency, pressure and energy consumption, are substantially identical to that of the HCFC-22 refrigerant being replaced. This near match in properties of the replacement refrigerant to those of HCFC-22 is essential for their use in such existing low temperature refrigeration systems or systems designed for using R-22 refrigerant, without requiring equipment replacement or modification, e.g. replacement or modification of expansion valves of the low temperature refrigeration system. The solutions suggested by the industry for R-22 replacements, such as R-407A and R-407C refrigerants, do not solve this problem since they require modification of the systems in an attempt to match R-22 operating characteristics.

Summary of the Invention

There is a need for a composition that overcomes all of the disadvantages associated with the prior art compositions heretofore proposed as HCFC-22 replacements.

Accordingly, there is provided a composition comprising: (a) 25-35 % weight difluoromethane (HFC-32); (b) 20-40 % weight pentafluoroethane (HFC-125); and (c) 35-45 % weight tetrafluoroethane.

It has been discovered that these compositions are especially useful to retrofit existing low temperature refrigeration systems employing HCFC-22 refrigerant.

In a further embodiment of the composition according to the invention, the composition comprises: (a) 28-32 % weight difluoromethane (HFC-32); (b) 28-32 % weight pentafluoroethane (HFC-125); and (c) 38-42 % weight tetrafluoroethane.

It has been found that this composition is particularly suitable alternative to HCFC-22 refrigerant and can be used as a direct replacement in retrofitting low temperature refrigeration systems which traditionally employed HCFC-22 refrigerant.

In an alternative embodiment of the composition according to the invention, the composition comprises a) 25-35 wt% difluoromethane (HFC-32), b) 25-35 wt% pentafluoroethane (HFC-125), and c) 40 wt% tetrafluoroethane (HFC-134a).

The composition according to the invention optionally includes one or more additional components other than difluoromethane (HFC-32), pentafluoroethane (HFC-125), and tetrafluoroethane (HFC-134a), such as, for example, refrigerants, lubricants, compatibilizers, surfactants or solubilising agents. The additional components are present in minor amounts such that performance characteristics such as superheat and other operating characteristics are not compromised.

In a still further embodiment of the composition according to the invention, the components a), b) and c) comprise at least 97 % by weight of the overall weight of the composition. Preferably, the components a), b) and c) comprise substantially the entire composition, *i.e.* the components a), b) and c) comprise substantially 100% by weight of the overall weight of the composition.

In a still further embodiment of the composition according to the invention, the composition comprises: (a) about 30 % weight difluoromethane (HFC-32); (b) about 30 % weight pentafluoroethane (HFC-125); and (c) about 40 % weight tetrafluoroethane.

This is the preferred composition according to the invention. When used as a refrigerant, this composition exhibits operating characteristics that are comparable to those of HCFC-22 refrigerant. This composition can be used as a direct replacement in retrofitting low temperature refrigeration systems which traditionally employed HCFC-22 refrigerant.

The refrigerant compositions of this invention may be employed in systems suitable for or capable of use with R-22 refrigerant such as existing, new or newly designed low temperature refrigeration systems. The ternary refrigerant compositions of this invention substantially match the operating characteristics of HCFC-22 refrigerant, especially in, desired evaporator superheat, cooling capacity, mass flow and efficiency, i.e., COP (coefficient of performance that is the ratio of refrigeration effect to the energy required) and thereby enable the ternary compositions of this invention to replace HCFC-22 in existing low temperature refrigeration systems or in refrigeration systems suitable for use with R-22 refrigerant, without requiring any significant system modification, such as adjustment, replacement or redesign of the R-22 system expansion valve. The values of the operating characteristics of the ternary compositions of this invention will generally be at least 90 % or more, preferably at least 95% or more, of the corresponding values of the operating characteristics of HCFC-22 in the low temperature refrigeration systems in which the ternary composition is to replace the HCFC-22 refrigerant. Also, the compositions employed in this invention are essentially non-flammable when tested in accordance with ASTM E681-2001 at conditions described in ASHRAE Standard 34 addendum P (3rd public review, January 1998).

The compositions according to present invention are acceptable refrigerant compositions for replacing R-22 refrigerant compositions in both moderate and low temperature refrigerant applications and systems. The reason the compositions of the present invention are acceptable for both moderate and low temperature refrigeration systems is that they are able to maintain acceptable superheat levels and acceptable refrigeration capacity over the entire range of moderate to low temperature refrigeration. There has been a significant need for a single refrigerant composition to function over a broad refrigeration range. For example, a supermarket does not want to have the need for two or more refrigerant compositions to serve the needs of a single store where food is kept at temperatures of from 32°F down to -10°F or below. The prior art compositions heretofore proposed as R-22 replacements do not possess the ability to provide acceptable refrigeration at both moderate and low temperature refrigeration as they are unable to provide acceptable superheat levels and refrigeration capacity.

The three recited components (*i.e.,* difluoromethane, pentafluoroethane and tetrafluoroethane) in the compositions according to the invention are present in amounts such that the operating characteristics of the refrigerant composition with respect to superheat provided during refrigeration is provided at an acceptable superheat level, and the operating characteristics of cooling capacity, mass flow characteristics and efficiency (COP), when employed as the refrigerant in a low temperature refrigeration system are each at least 90%, preferably at least 95%, of the operating characteristics of chlorodifluoromethane (HCFC-22) if HCFC-22 were to be employed as the refrigerant in such low temperature refrigeration systems.

In particular, when the compositions according to the invention are employed in low temperature refrigeration systems, that is refrigeration systems wherein the evaporator temperature is below 32°F, about 14°F or below, about 5°F or below, or about -22°F or below, the compositions according to the invention have an operating characteristic of superheat during refrigeration of at least 2°F. Preferably, the compositions according to the invention have an operating characteristic of superheat during refrigeration in the range of from about 8°F to about 16°F for an evaporator temperature range of about 15°F to about 30°F, from about 8°F to about 12°F for an evaporator temperature of about -15°F, or from about 4°F to about 8°F for an evaporator temperature of about -30°F.

There is also provided a process for producing low temperature refrigeration in a low temperature refrigeration system, said process comprising the steps of:

  (a) condensing a composition according to the invention; and

  (b) evaporating the composition in the vicinity of a body to be cooled,

wherein the evaporator temperature of the refrigeration system is below 32°F.

Preferably, the evaporator temperature of the refrigeration system is about 14°F or below.

Preferably, the evaporator temperature of the refrigeration system is about 5°F or below.

Preferably, the evaporator temperature of the refrigeration system is about -22°F or below.

In a further embodiment of the process according to the invention, the composition has an operating characteristic of superheat during refrigeration of at least 2°F. Preferably, the composition has an operating characteristic of superheat during refrigeration in the range of from about 8°F to about 16°F for an evaporator temperature range of about 15°F to about 30°F, from about 8°F to about 12°F for an evaporator temperature of about -15°F, or from about 4°F to about 8°F for an evaporator temperature of about -30°F.

The operating characteristics of the refrigerant composition with respect to cooling capacity, efficiency (COP), and mass flow, when employed as the refrigerant in the refrigeration system, are each at least about 90%, preferably at least about 95%, of those operating characteristics if chlorodifluoromethane (HCFC-22) were to be employed as the refrigerant in said refrigeration system at identical refrigeration conditions.

The refrigeration system is suitable for use with chlorodifluoromethane (HFC-22) and the composition according to the invention can be used in place of HFC-22 in the system without requiring any adjustment of the system. In particular, no adjustment (including redesign) or replacement of the HCFC-22 expansion valve in the low temperature refrigeration system is required in order to achieve the desired operating characteristics. The phrase "suitable to be used with chlorodifluoromethane (HCFC-22)" means a system has used, or has been adapted for use with chlorodifluoromethane (HCFC-22) refrigerant in the system to obtain the low temperature refrigeration.

In a further aspect of the process according to the invention, the low temperature refrigeration system contains HCFC-22 and the process further comprises the step of replacing at least a portion of, and preferably essentially totally replacing, the chlorodifluoromethane (HCFC-22) refrigerant in the refrigeration system with a composition according to the invention. "Essentially totally replacing" means that some slight amount, generally less than about 5%, preferably less than about 3%, and more preferably less than about 1 %, of HCFC-22 (chlorodifluoromethane) may inadvertently remain in the system upon replacement thereof.

There is also provided a low temperature refrigeration system comprising a condenser, an evaporator and a refrigerant composition according to the invention, wherein the evaporator temperature of the refrigeration system is below 32°F.

Preferably, the evaporator temperature of the refrigeration system is about 14°F or below.

Preferably, the evaporator temperature of the refrigeration system is about 5°F or below.

Preferably, the evaporator temperature of the refrigeration system is about -22°F or below.

In a further embodiment of the system according to the invention, the composition has an operating characteristic of superheat during refrigeration of at least 2°F. Preferably, the composition has an operating characteristic of superheat during refrigeration in the range of from about 8°F to about 16°F for an evaporator temperature range of about 15°F to about 30°F, from about 8°F to about 12°F for an evaporator temperature of about -15°F, or from about 4°F to about 8°F for an evaporator temperature of about -30°F.

The operating characteristics of the refrigerant composition with respect to cooling capacity, efficiency (COP), and mass flow, when employed as the refrigerant in the refrigeration system according to the invention, are each at least about 90%, preferably at least about 95%, of those operating characteristics if chlorodifluoromethane (HCFC-22) were to be employed as the refrigerant in said refrigeration system at identical refrigeration conditions.

The refrigeration system according to the invention is suitable for use with chlorodifluoromethane (HCFC-22) and the composition according to the invention can be used in place of HCFC-22 in the system without requiring any adjustment of the system. In particular, no adjustment (including redesign) or replacement of the HCFC-22 expansion valve in the low temperature refrigeration system is required in order to achieve the desired operating characteristics. The phrase "suitable to be used with chlorodifluoromethane (HCFC-22)" means a system has used, or has been adapted for use with chlorodifluoromethane (HCFC-22) refrigerant in the system to obtain the low temperature refrigeration.

Although the refrigerant compositions of this invention have been formulated to be useful to replace HCFC-22 refrigerant in existing low temperature refrigeration systems and other low temperature refrigeration systems suitable for using chlorodifluoromethane (HCFC-22) refrigerant, it will be appreciated that use of such refrigerant compositions of this invention is not limited to such use but will have other refrigerant uses, such as, for example, in non-low temperature refrigeration systems. The compositions according to the invention are acceptable refrigerant compositions for replacing R-22 refrigerant compositions in both moderate and low temperature refrigerant applications and systems. The reason the compositions of the present invention are acceptable for both moderate and low temperature refrigeration systems is that they are able to maintain acceptable superheat levels and acceptable refrigeration capacity over the entire range of moderate to low temperature refrigeration.

Brief Description of the Drawing

In the drawings,

Figure 1 is an illustration of a typical refrigeration system.

Figure 2 is an illustration of suitable superheat measurement points in a typical refrigeration system.

Figure 3 is an illustration of a compressor of a typical refrigeration system showing how suction line superheat is measured.

Figure 4 is a graph of the refrigerant compositions of this invention outlining the proportions of the tertiary composition components, and showing their close proportional relationship to two comparative refrigerant compositions examples outside the scope of the invention that were tested in a low temperature refrigeration system and shown not to provide at least about 90%, preferably at least about 95%, of the operating characteristics of R-22 over a wide range of low temperature operating temperatures without the necessity for modification of the system.

Detailed Description of the Invention

It has been discovered that specific ternary refrigerant compositions can be utilized in a process for producing low temperature refrigeration in a low temperature refrigeration system suitable for use with HCFC-22 refrigerant, which system achieves and maintains an evaporator temperature of below 32°F, or about 14°F or below, or about 5°F or below, and even about -22°F or below. A composition according to the invention comprises (a) 25-35 % weight difluoromethane (HFC-32); (b) 20-40 % weight pentafluoroethane (HFC-125); and (c) 35-45 % weight tetrafluoroethane. A composition comprising (a) 28-32 % weight difluoromethane (HFC-32); (b) 28-32 % weight pentafluoroethane (HFC-125); and (c) 38-42 % weight tetrafluoroethane has been found to be particularly good. In one embodiment of the composition according to the invention, the components a), b) and c) comprise at least 97 % by weight of the overall weight of the composition. In a preferred embodiment, the components a), b) and c) comprise substantially the entire composition. A preferred composition according to the invention comprises (a) about 30 % weight difluoromethane (HFC-32); (b) about 30 % weight pentafluoroethane (HFC-125); and (c) about 40 % weight tetrafluoroethane.

The process for producing low temperature refrigeration in a low temperature refrigeration system comprises the steps of condensing a composition according to the invention and thereafter evaporating the refrigerant with an evaporator in the vicinity of a body to be cooled, wherein an evaporator temperature of the refrigeration system is below 32°F, or about 14°F or below, or about 5°F or below, and even about -22°F or below. The compositions according to the invention have an operating characteristic of superheat during refrigeration of at least 2°F. In preferred embodiments, the compositions according to the invention have an operating characteristic of superheat during refrigeration in the range of from about 8° to about 16°F for an evaporator temperature range of about 15 to 30°F, in the range of from about 8° to about 12°F for an evaporator temperature of about -15°F, or in the range of from about 4° to about 8°F for an evaporator temperature of about -30°F. The operating characteristics of the refrigerant composition with respect to cooling capacity, efficiency (COP), and mass flow, when employed as the refrigerant in the refrigeration system, are each at least about 90%, preferably at least about 95%, of those operating characteristics if chlorodifluoromethane (HCFC-22) were employed as the refrigerant in said refrigeration system at identical refrigeration conditions.

The phrase "low temperature refrigeration system" means a refrigeration system that achieves and maintains an evaporator temperature of below 32°F, preferably about 14°F or below, and more particularly about 5°F or below, and especially a temperature of about -22°F or below.

The term "superheat" means the temperature rise of the refrigerant at the exit of the evaporator above the saturated vapor temperature (or dew temperature) of the refrigerant. This feature and its importance to refrigeration systems is best understood by briefly outlining the operation of a typical refrigeration system.

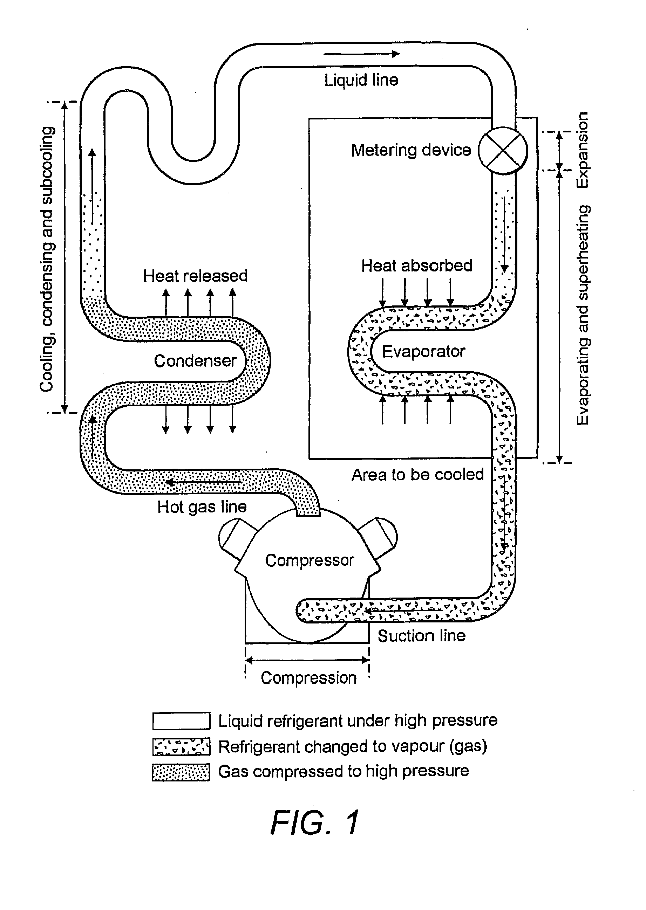

In a typical refrigeration system such as that illustrated in Figure 1, a compressor sends hot gas to a condenser. The condensed liquid passes through an expansion valve into an evaporator where it evaporates and collects heat from the area to be cooled. The gaseous refrigerant then enters the compressor where the compression process raises the pressure and temperature. From the compressor, the refrigerant is routed back to the condenser and the cycle is repeated. Based on the principle that heat flows from warmer areas to cooler areas, the refrigeration cycle consists of seven stages: (i) compression of hot gas; (ii) cooling; (iii) condensing; (iv) subcooling; (v) expansion; (vi) evaporation; and (vii) super heating. A basic vapor compression refrigeration system comprises four primary components: a metering device (e.g., a capillary tube, fixed orifice/piston, or a thermostatic expansion valve), evaporator, compressor, and condenser (see Figure 1).

Compression energy elevates the vapor pressure to a boiling point that is below the condensing mediums' temperature. In other words, the compressor elevates the boiling point of the refrigerant to a point at which the air (or water) moving across the condenser is low enough to condense the refrigerant to a liquid. Additional passes in the condenser coil cool the liquid refrigerant below its boiling point to ensure it remains a liquid as it experiences pressure drop in its journey to the evaporator. This cooling below the boiling point is known as subcooling. A metering device at the evaporator inlet acts as a "dam" to restrict flow and drop the refrigerant pressure to a new lower boiling point. This new boiling point is below the evaporator medium (air or water) temperature so that the air or water across the evaporator will cause the refrigerant to boil. After all of the refrigerant in the evaporator has boiled to a vapor, the vapor will pick up additional heat through extra passes in the evaporator. The amount of vapor temperature increase above the boiling temperature is known as superheat. The compressor reduces the gas to a high pressure while simultaneously raising the temperature of the gas. The hot gas is then delivered to the condenser where it is cooled, dissipating the heat and steadily converting the gas back to a liquid state. When the liquid under high pressure reaches the metering device, the cycle starts over.

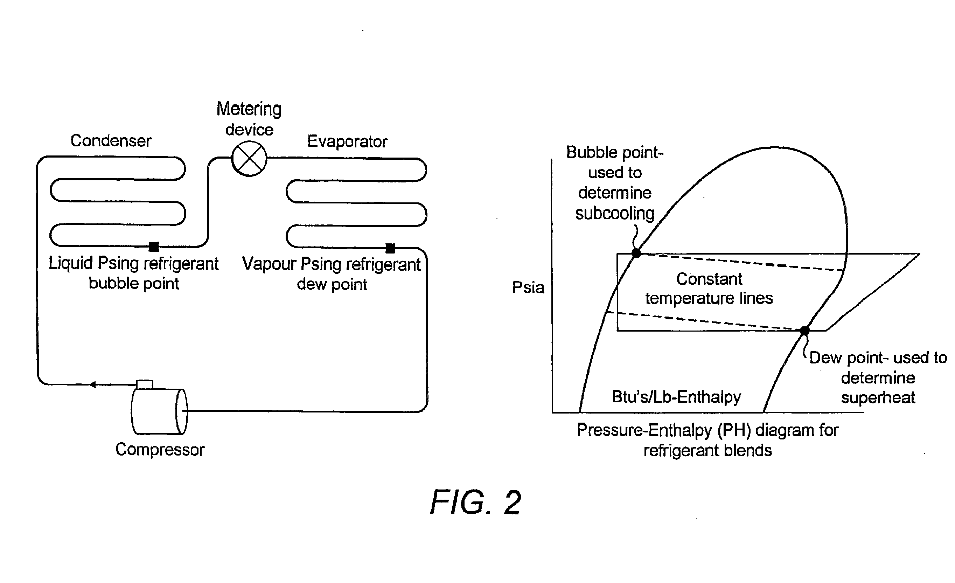

In the system's evaporator, conversion of liquid to vapor involves adding heat to the liquid at its boiling temperature, commonly referred to as the saturation temperature. After all of the refrigerant has boiled to a vapor, any additional temperature increase above the boiling point is known as superheat. The temperature and pressure of the refrigeration system is measured in order to assess the system performance. The superheat of a refrigeration system can be determined in a number of ways. One such method is the superheat temperature/pressure method and, as the name suggests, involves measurement of the suction pressure and one temperature - the temperature of the refrigerant at the outlet of the evaporator on the suction line. The boiling temperature is determined by using a pressure-temperature (PT) chart. For single component refrigerants such as tetrafluoroethane (R-134a), boiling temperature remains constant during the saturation or boiling phase provided that the pressure remains the same within the evaporator. For refrigerant blends, the temperature changes during the boiling or saturation phase. This is referred to as glide. Refrigerants with a temperature glide use dew point (DP) temperature. This is the temperature of the refrigerant when the last of the liquid has boiled into a vapor. Any vapor temperature increase above the dew point temperature is called superheat (see Figure 2).

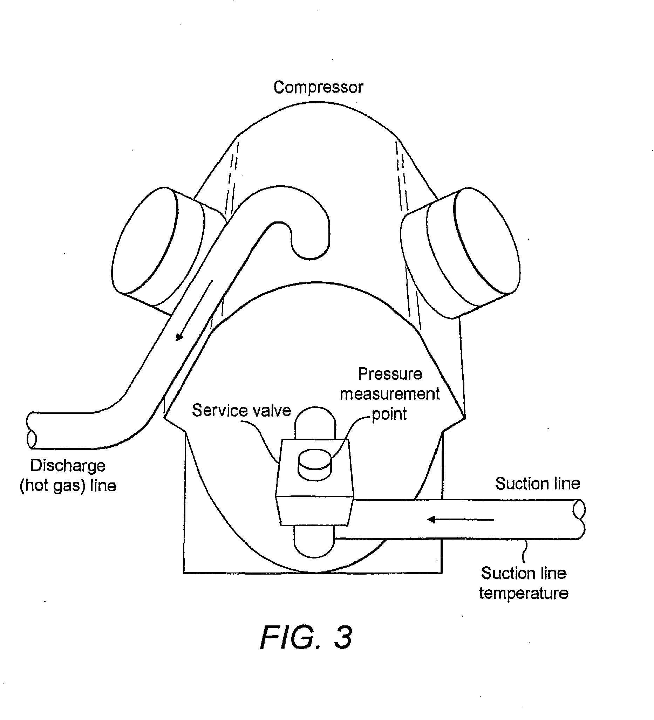

Figure 3 illustrates how the suction line superheat is determined using the temperature-pressure method. The pressure is measured at the suction line service valve. The evaporator boiling temperature is determined from a temperature-pressure chart using suction line pressure. The evaporator boiling temperature is subtracted from the suction line temperature measured by a digital thermometer. The difference is superheat. Pressure-temperature charts are very common tools for refrigeration technicians and can be and have been generated for the compositions according to the invention.

When measuring superheat, the system must be running long enough for temperatures and pressures to stabilize while verifying normal airflow cross the evaporator. Using a clamp or other means of attachment, the suction line temperature is determined by attaching the thermometer probe around a bare section of the pipe, at the outlet of the evaporator. Best results are obtained when the pipe is free of oxides or other foreign material. Next, a pressure gauge (usually part of a manifold gauge set) is attached to the suction line service valve and the pipe temperature and pressure are noted. This pressure reading will be that of the boiling refrigerant inside the evaporator, assuming no abnormal restrictions exist within the suction line. Using this pressure value, the evaporator (or dew point) boiling temperature is determined from a PT chart for the refrigerant type being used. The boiling/dew point temperature is subtracted from the suction line temperature to find the superheat. The suction line temperature may also be taken by attaching a bead thermocouple to the suction line. Care must be taken to insulate the thermocouple and use heat-conducting compound to minimize errors due to heat loss to ambient air.

The superheat value reflects the performance of the refrigerant composition in the refrigerant system. In normal operation, the refrigerant entering the compressor must be sufficiently superheated above the evaporator boiling temperature to ensure that the compressor draws only vapor and no liquid refrigerant. A low or zero superheat reading indicates that the refrigerant did not pick up enough heat in the evaporator to completely boil into a vapor. Liquid refrigerant drawn into the compressor typically causes slugging, which can damage the compressor valves and/or internal mechanical components. Additionally, liquid refrigerant in the compressor, when mixed with oil, reduces lubrication and increases wear, causing premature failure.

On the other hand, if the superheat reading is excessive - above 20°F to 30°F - it indicates that the refrigerant has picked too much heat, *i.e.* the cooling capacity and efficiency of the refrigeration system suffers leading to reliability problems due to high compressor discharge temperatures. It is therefore desirable to use a refrigerant composition that has a superheat in the range of about 5°F to about 15°F.

The term "COP" is a measure of energy efficiency and means the ratio of refrigeration or cooling capacity to the energy requirement of the refrigeration system, i.e., energy to run the compressor. COP is the useful output of the refrigeration system, in this case the refrigeration capacity or how much cooling is provided, divided by how much power it takes to get this output. Essentially, it is a measure of the efficiency of the system.

The term "mass flow rate" is the amount (pounds) of refrigerant flowing through a conduit of a given size in a given amount of time. The mass flow rate is important when retrofitting an existing moderate or low temperature refrigeration system with a composition according to the invention. The mass flow rate of the replacement refrigerant composition must be close to that of the original refrigerant, in the present case, chlorodifluoromethane (R-22).

The term "capacity" refers to the amount of cooling provided, in BTUs /hr, by the refrigerant in the refrigeration system. This is experimentally determined by multiplying the change in enthalpy, in BTU/lb, of the refrigerant as it passes through the evaporator by the mass flow rate of the refrigerant. The enthalpy can be determined from a measurement of the pressure and temperature of the refrigerant. The capacity of the refrigeration system relates to the ability to maintain an area to be cooled at a specific temperature, for example, maintaining food at a specified temperature as required by various health and safety regulations. If a low temperature refrigeration system has a lower capacity, the food in the display cases (both fresh and frozen) will rise in temperature and exceed specified limits.

Refrigerant compositions that do not meet both the evaporator superheat requirements and have values for their operating characteristics, such as capacity, COP and mass flow rate, in low temperature refrigeration systems that will be at least 90 %, preferably at least 95 %, of the corresponding values of the operating characteristics of HCFC-22 in an identical low temperature refrigeration system are not suitable for use in replacing HCFC-22 refrigerant in such low temperature refrigeration systems since the use of such compositions will generally require modification or replacement or redesign of the HCFC-22 refrigeration system components, such as expansion valve used in HCFC-22 refrigeration systems, and thus lead to undesired expense and downtime for the systems. In contrast, the ternary refrigerant compositions of this invention do have the ability to substantially match evaporator superheat requirements and meet at least 90 %, preferably at least 95 %, or more of the value of, operating characteristics (such as, cooling capacity, efficiency and mass flow), of HCFC-22 in low temperature refrigeration systems across a wide range of refrigeration conditions, e.g., evaporator and ambient temperatures,

The surprising ability of the ternary refrigerant compositions of this invention to substantially match operating characteristics of HCFC-22 in low temperature refrigeration systems across a wide range of refrigeration conditions, e.g., evaporator and ambient temperatures, and the inability of the compositions within the scope of the prior art and other comparative compositions to substantially match such operating characteristics of HCFC-22 in such systems is illustrated by the following non-limiting, examples.

Ternary compositions in accordance with this invention were prepared by producing mixtures of the refrigerants HFC-32, HFC-125 and HFC-134a in the amounts indicated in the following Table 1. The compositions were subjected to thermodynamic analysis to determine their ability to match the operating characteristics of HCFC-22 (R-22) in a low temperature refrigeration system. This analysis was performed using properties from the National Institute of Science and Technology (NIST) Reference Fluid Thermodynamic and Transport Properties Database (Refprop 7.0, NIST Std. Database, 2002). The assumptions used to conduct the analysis are the following. All calculations were performed assuming an average evaporation temperature of -25° F (-31.7°C) and 25° F (13.9° C) total super heat including 10°F (5.5° C) useful (in evaporator). Average condensing temperature is equal to ambient temperature plus 15° F (8.3° C). Capacity is based on 1 cubic foot/min (0.028m$^3$/min) compressor displacement. COP assumes 65% isentropic compressor efficiency.

The results of the performance prediction for the compositions of this invention relative to HCFC-22 (R-22) are set forth in the following Table 1.

Table 1

| Composition components (mass percent) | Ambient temperature °F (°C) | Capacity Btu/hr (watts) | | Mass Flow lb/min (kg/min) | | COP | |
|---|---|---|---|---|---|---|---|
| | | Value | % Relative to HCFC-22 value | Value | % Relative to HCFC-22 value | Value | % Relative to HCFC-22 value |
| HCFC-22 | 60° (15.5°) | 1771 (519) | N/A | 0.404 (.184) | N/A | 2.08 | N/A |
| | 80° (26.6°) | 1662 (487) | N/A | 0.404 (.184) | N/A | 1.74 | N/A |
| | 95° (35°) | 1550 (454) | N/A | 0.404 (.184) | N/A | 1.46 | N/A |
| HFC-32 (30%) HFC-125 (30%) HFC-134a (40%) | 60° (15.5°) | 1837 (538) | 103.7% | 0.419 (.190) | 103.7% | 1.97 | 94.7% |
| | 80° (26.6°) | 1662 (494) | 101.4% | 0.416 (.189) | 103.0% | 1.62 | 93.1% |
| | 95° (35°) | 1529 (448) | 98.6% | 0.413 (.188) | 102.2% | 1.34 | 91.8% |
| HFC-32 (25%) HFC-125 (35%) HFC-134a (40%) | 60° (15.5°) | 1776 (520) | 100.3% | 0.427 (.194) | 105.7% | 1.96 | 94.2% |
| | 80° (26.6°) | 1623 (476) | 97.7% | 0.424 (.193) | 105.0% | 1.61 | 92.5% |
| | 95° (35°) | 1466 (430) | 94.6% | 0.420 (.191) | 104.0% | 1.33 | 91.1% |

The substantially identical match of the operating characteristics of the ternary refrigerant compositions of this invention to that of HCFC-22 demonstrates that such ternary compositions can be used to retrofit existing low temperature HCFC-22 refrigerant-containing refrigeration systems without any significant modification to the refrigeration system components. This match also demonstrates that the compositions of this invention can be used in any low temperature refrigeration system suitable for use with HCFC-22.

A ternary composition in accordance with this invention, as well as two comparative compositions in accordance with the disclosure in prior art publication EP 0 509 673 A1, comprising mixtures of the refrigerants HFC-32, HFC-125 and HFC-134a in the amounts indicated in the following Table 2, were subjected to thermodynamic analysis to determine their ability to substantially match the operating characteristics of HCFC-22 in a low temperature refrigeration system operating at -25°F (-31.7°C) evaporation temperature and 110°F (43°C) condensing temperature. This analysis was performed using properties from the National Institute of Science and Technology (NIST) Reference Fluid Thermodynamic and Transport Properties Database (Refprop 7.0, NIST Std. Database, 2002). The assumptions used to conduct the analysis are the following. All calculations were performed assuming an average evaporation temperature of -25° F (-31.7°C, and 25° F (13.9° C) total super heat at the compressor which includes 10° F (5.5° C) useful in the evaporator. Average condensing temperature is equal to ambient temperature plus 15° F (8.3° C). Capacity is based on 1 cubic foot/min (0.028m$^3$/min) compressor displacement. COP assumes 65% isentropic compressor efficiency. The results of the thermodynamic analysis are reported in Table 2.

Table 2

| Composition components (wt percent) | Capacity Btu/hr (watts) | | Mass Flow lb/min (kg/min) | |
|---|---|---|---|---|
| | Value | % Relative to HCFC-22 value | Value | % Relative to HCFC-22 value |
| HCFC-22 (100%) | 1550 (454) | | 0.404 (.184) | |
| HFC-32 (35%) HFC-125 (10%) HFC-134a (55%) Comparative composition | 1458 (427) | 94.1% | 0.350 (.159) | 86.7% |
| HFC-32 (30%) HFC-125 (15%) HFC-134a (55%) Comparative composition | 1402 (411) | 90.5% | 0.355 (.161) | 88.0% |
| HFC-32 (30%) HFC-125 (30%) HFC-134a (40%) Inventive composition | 1529 (448) | 98.6% | 0.413 (.188) | 102.2% |

As can be seen from the data above, for the comparative compositions of the prior art, their operating characteristics are not substantially identical to the operating characteristic of HCFC-22 in capacity and mass flow and therefore are not considered suitable to replace HCFC-22 refrigerant in existing low temperature refrigeration systems without the need to change other components of the refrigeration system. In contrast thereto, the data for the compositions of this invention are substantially identical to the operating characteristics of the HCFC-22 refrigerant and, therefore, are suitable to replace HCFC-22 refrigerant in existing low temperature refrigeration systems without the need to change components of the refrigeration system. This match also demonstrates that the compositions of this invention can be used in any low temperature refrigeration system suitable for use with HCFC-22.

The criticality of the proportions of the components of the ternary composition of the present invention is demonstrated by the following comparative testing. The comparative testing, in relationship to an HCFC-22 (R-22) composition, is comparative testing of three ternary compositions of this invention (designated compositions LT, LT1 and LT2) with two closely related prior art ternary compositions (designated R-407A and R-407C) having proportions of the three components outside the ranges of the component proportions of this invention. The compositions are further identified in Table 3.

Comparison in a Typical Commercial Refrigeration System

The compositions were tested with the refrigerant the system was designed for, HCFC-22, to serve as a baseline for subsequent tests. The performance of all three inventive compositions was nearly identical to that of the baseline HCFC-22 (R-22). There was no need to adjust the expansion valve much less replace it. Refrigerant mass flow rate, cooling capacity, and efficiency (COP) matched that of HCFC-22 within expected measurement error. Other refrigerants R-407A and R-407C did not perform adequately. Using these comparative refrigerants would require change of system components such as the expansion valve and possibly the evaporator.

The commercial refrigeration system equipment employed was a commercially available condensing unit and an evaporator for a walk-in freezer/cooler. The following is a detailed description of the equipment:

Condensing Unit
Unit as manufactured by Keeprite Refrigeration, Brantford, Ontario
Model K350L2 outdoor, air cooled, low temperature, R-22 condensing unit equipped with:

460 volts / 60 Hz. / 3 phase electrical, 2DF-0300 Copeland compressor, with demand cooling for low temperature conditions and
KAKA-020 Copeland compressor for higher temperature conditions suction accumulator, oil separator with solenoid, receiver, two valve flooded head pressure control system, and standard operating controls.

Evaporator
Unit as manufactured by Keeprite Refrigeration.
Model KUCB204DED electric defrost, low profile DX fed evaporator with:

230 volts / 60 Hz. / 1 phase electrical, electric defrost heaters, 17,340 BTUH @ - 20°F. SST, 10 degree TD, 3,200 CFM air flow, and Sporlan distributor and TXV.

The evaporator was installed in an environmentally controlled chamber that served as the walk-in freezer/cooler. The condenser unit was installed in another chamber to control temperature. Instrumentation was added to the system to measure refrigerant mass flow rate, refrigerant pressure & temperature before and after each component, air temperature and flow in/out of evaporator and condenser, and power to condensing unit and evaporator. Tests were run at two typical freezer temperatures (0°F and -15°F), two typical walk-in cooler temperatures (35°F and 50°F) and a range of ambient temperatures from 55°F to 95°F. It should be noted that the refrigerant temperatures were typically 15 to 20°F lower than the chamber temperatures.

A coriolis-type flow meter was installed in the liquid line after the liquid receiver and before the expansion valve in order to measure the refrigerant mass flow rate. This flow meter is a Micromotion CMF025 model with an accuracy of 0.1% of the measured flow.

Pressures were measured using Honeywell TJE transducers with varied ranges depending of the location (0-300 PSIA, 0-500 PSIA). The accuracy is of $\pm$0.1% of full scale. The dew temperature of the refrigerant compositions was determined from Refrop 7.0 - NIST using the pressure measured directly at the outlet of the evaporator.

The temperature at the evaporator outlet was measured directly using Type T Thermocouples made by Omega. The range of operation of these Type T Thermocouples is from -40°C (-40°F) to 125°C (257°F) with an estimated accuracy of $\pm$0.2 °C. The refrigerant superheat was then calculated using the following equation:

$$\text{Superheat = Temperature at evaporator Outlet - Dew Temperature}$$

Many other devices known to the skilled person may be used to determine the temperature and pressure values. Other suitable devices for measuring the pressure at the suction line service valve include the TITAN® 2-Valve and 4-Valve and BRUTE II® 4-Valve Test and Charging Manifolds manufactured by Ritchie Engineering. Suitable devices for measuring the suction line temperature include the digital thermometers in the 69200 range manufactured by Ritchie Engineering.

Power consumption of the different components of the refrigeration was measured using OHIO Semitronics power transducers. Due to the varied range a GW5-002X5 (0-1000 W) model was used for the condenser fan, a GW5-002X5-Y21 (0-500 W) model was used for the evaporator fan and a GW5-023X5 (0-8000 W) model was used for the compressor. The accuracy of these transducers is 0.2% of full scale. The power consumption was calculated using the following equation:

$$\text{Total Power = Evaporator-Fan Power + Condenser-Fan Power + Compressor Power}$$

The refrigerating capacity was calculated using the following equation:

$$\text{Capacity = Mass Flow x (Enthalpy at Evaporator Outlet - Enthalpy at Evaporator Inlet)}$$

wherein, the mass flow is measured directly as indicated above, the enthalpy at evaporator inlet is the saturated liquid enthalpy for the temperature at the inlet of the expansion valve (value extracted from Refprop 7.0 - NIST) and the enthalpy at the outlet of the evaporator is obtained from Refprop 7.0 - NIST using the direct measurements of temperature and pressure at the evaporator outlet. The estimated accuracy is ±3% of the reported value.

The tested compositions were as follows.

**Table 3**

| Commercial Name or Designation | Refrigerants Tested % by weight | | |
|---|---|---|---|
| | R-32 | R-125 | R-134a |
| LT | 30 | 30 | 40 |
| LT1 | 25 | 35 | 40 |
| LT2 | 35 | 25 | 40 |
| R-407A | 20 | 40 | 40 |
| R-407C | 23 | 25 | 52 |

R-404a is composed of 44 wt % HFC-125, 52 wt % HFC-143A and 4 wt % HFC-134a. It is a common low temperature refrigerant.

The results of the series of tests are shown in Tables 4 through 7. Additional comparative tests were performed on the prior art compositions R-407B, R-407D and R-407E. The results of these tests are shown in Tables 9 and 10. Table 4 lists the superheat at the exit of the evaporator. In order for the system to operate reliably and efficiently, superheat should be in the 8 to 16°F (4.4 to 8.9°C) range for moderate temperatures (e.g. 35°F and 50°F Cooler Temp.), 8 to 12°F (4.4 to 6.7°C) range for moderately low temperatures (e.g. 0°F Freezer Temp.) and 4 to 8 °F (2.2 to 4.4°C) range for very low temperatures (e.g. -15°F Freezer Temp.) (Ref: Sporlan Valve Company, Expansion Valve Bulletin). If the superheat is too low or negative, the refrigerant is in the two-phase region (liquid and vapor) and liquid refrigerant can be leaving the evaporator and potentially cause damage to the compressor. If the superheat is too high, the capacity and efficiency of the system suffers and could also cause reliability problems due to high compressor discharge temperatures.

**Table 4**

| | | Evaporator Superheat (°F) | | | | | Refrigerant | | | | | |
|---|---|---|---|---|---|---|---|---|---|---|---|---|
| | | | | | | | R-407A | | R-407C | | R-404A | |
| Chamber Temp. | Approx. Evap. Temp. | Outdoor Temp. | R-22 | LT | LT1 | LT2 | No Adj. | Adj TXV | No Adj. | Adj TXV | No Adj. | Adj TXV |
| -15°F | -30°F | 55°F | 6.78 | 7.39 | 6.99 | 5.06 | 2.18 | - | -0.51 | - | 19.43 | - |
| | | 75°F | 6.80 | 4.42 | 6.32 | 5.63 | 0.20 | - | -1.53 | - | 17.30 | - |
| | | 95°F | 4.94 | 2.92 | 1.90 | 5.06 | -0.50 | 4.90 | -1.25 | - | 15.48 | - |
| 0°F | -20°F | 55°F | 11.44 | 11.57 | 11.56 | 10.49 | 7.76 | - | 5.88 | | 25.04 | - |
| | | 75°F | 11.99 | 11.05 | 9.70 | 11.22 | 8.67 | - | 4.84 | 10.50 | 24.32 | - |
| | | 95°F | 9.95 | 8.97 | 9.14 | 11.48 | 7.48 | 10.00 | 4.15 | 8.50 | 21.52 | 12.50 |
| 35°F | 15°F | 55°F | 11.66 | 13.78 | 12.21 | 14.55 | 11.39 | - | 6.88 | - | 23.36 | - |
| | | 80°F | 10.78 | 11.54 | 10.93 | 12.59 | 10.12 | - | 6.52 | - | 21.48 | - |
| | | 95°F | 9.08 | 10.39 | 10.01 | 11.78 | 9.11 | - | 5.55 | - | 19.78 | 9.77 |
| 50°F | 30°F | 55°F | 12.06 | 16.85 | 15.08 | 16.58 | 14.93 | - | 9.53 | - | 27.11 | - |
| | | 80°F | 12.13 | 13.09 | 13.11 | 14.89 | 12.16 | - | 8.65 | - | 23.86 | - |
| | | 95°F | 10.43 | 11.86 | 12.00 | 13.52 | 10.69 | - | 7.41 | - | 21.89 | - |

From the results, it is clear that for refrigerants R-407A, R-407C, and R-404A, the expansion valve needs to be either adjusted or changed. R-407A and R-407C allows liquid to leave the evaporator at low temperature (noted by negative superheat numbers). R-404A has too high a superheat, which leads to poor cooling performance.

The refrigerant mass flow, cooling capacity, and efficiency (COP) are shown relative to R-22 in the following three tables. LT, LT1, and LT2 consistently show performance comparable to that of the refrigerant the system was designed to operate with, R-22. This is especially true for the LT blend at the highest ambient temperature for both 0°F and -15°F freezer temperatures, where the match with the mass flow and capacity with R-22 is most critical (design point of the system). LT1 and LT2 also show acceptable performance considering that no adjustment or change of the expansion valve is needed.

**Table 5**

| | | | | | | Refrigerant | | | | | |
|---|---|---|---|---|---|---|---|---|---|---|---|
| **Refrigerant Mass Flow Relative to R-22** | | | | | | | | | | | |
| Chamber Temperature | Approx. Evap. Temp. | Outdoor Temperature | LT | LT1 | LT2 | R-407A | | R-407C | | R-404A | |
| | | | | | | No Adj. | Adj TXV | No Adj. | Adj TXV | No Adj. | Adj TXV |
| -15°F | -30°F | 55°F | 99% | 98% | 97% | 111% | - | 98% | - | 122% | - |
| | | 75°F | 101% | 98% | 97% | 110% | - | 101% | - | 121% | - |
| | | 95°F | 101% | 96% | 100% | 115% | 90% | 97% | - | 124% | - |
| 0°F | -20°F | 55°F | 95% | 100% | 94% | 103% | - | 95% | - | 112% | - |
| | | 75°F | 100% | 102% | 88% | 105% | - | 94% | 86% | 115% | - |
| | | 95°F | 101% | 103% | 93% | 108% | 92% | 97% | 90% | 121% | 145% |
| 35°F | 15°F | 55°F | 98% | 100% | 93% | 106% | - | 100% | - | 114% | - |
| | | 80°F | 98% | 99% | 91% | 104% | - | 98% | - | 113% | - |
| | | 95°F | 97% | 97% | 90% | 104% | - | 97% | - | 110% | 135% |
| 50°F | 30°F | 55°F | 97% | 99% | 89% | 104% | - | 99% | - | 109% | - |
| | | 80°F | 99% | 101% | 90% | 107% | - | 99% | - | 111% | - |
| | | 95°F | 98% | 100% | 90% | 107% | - | 98% | - | 113% | - |
| Average of All Conditions | | | 99% | 99% | 93% | 107% | 91% | 98% | 88% | 115% | 140% |

**Table 6**

| Refrigeration Capacity Relative to R-22 | | | | | | | | | | | |
|---|---|---|---|---|---|---|---|---|---|---|---|
| | | | | | | Refrigerant | | | | | |
| Chamber Temperature | Approx. Evap. Temp. | Outdoor Temperature | LT | LT1 | LT2 | R-407A | | R-407C | | R-404A | |
| | | | | | | No Adj. | Adj TXV | No Adj. | Adj TXV | No Adj. | Ad TXV |
| -15°F | -30°F | 55°F | 99% | 90% | 97% | 95% | - | 91% | - | 88% | - |
| | | 75°F | 103% | 94% | 104% | 98% | - | 99% | - | 87% | - |
| | | 95°F | 99% | 89% | 104% | 99% | 80% | 93% | - | 83% | - |
| 0°F | -20°F | 55°F | 99% | 96% | 100% | 92% | - | 94% | | 82% | - |
| | | 75°F | 101% | 96% | 93% | 94% | - | 91% | 85% | 83% | - |
| | | 95°F | 99% | 95% | 97% | 93% | 80% | 92% | 88% | 81% | 91% |
| 35°F | 15°F | 55°F | 104% | 99% | 103% | 100% | - | 101% | - | 90% | - |
| | | 80°F | 99% | 95% | 97% | 95% | - | 97% | - | 84% | - |
| | | 95°F | 97% | 92% | 95% | 93% | - | 94% | - | 78% | 92% |
| 50°F | 30°F | 55°F | 104% | 100% | 100% | 100% | - | 100% | - | 89% | - |
| | | 80°F | 99% | 97% | 96% | 97% | - | 97% | - | 83% | - |
| | | 95°F | 98% | 96% | 95% | 96% | - | 97% | - | 81% | - |
| Average of All Conditions | | | 100% | 96% | 97% | 96% | 80% | 96% | 87% | 84% | 92% |

EP 2 821 455 A2

**Table 7**

| Chamber Temperature | Approx. Evap. Temp. | Outdoor Temperature | LT | LT1 | LT2 | R-407A | | R-407C | | R-404A | |
|---|---|---|---|---|---|---|---|---|---|---|---|
| **COP (Efficiency) Relative to R-22** | | | | | | | | | | | |
| | | | | | | Refrigerant | | | | | |
| | | | | | | No Adj. | Adj TXV | No Adj. | Adj TXV | No Adj. | Adj TXV |
| -15°F | -30°F | 55°F | 99% | 94% | 94% | 95% | - | 95% | - | 90% | - |
| | | 75°F | 101% | 97% | 101% | 99% | - | 102% | - | 86% | - |
| | | 95°F | 98% | 94% | 101% | 99% | 89% | 100% | - | 84% | - |
| 0°F | -20°F | 55°F | 100% | 98% | 98% | 92% | - | 99% | | 83% | - |
| | | 75°F | 100% | 95% | 92% | 94% | - | 95% | 92% | 83% | - |
| | | 95°F | 94% | 95% | 93% | 93% | 85% | 96% | 93% | 80% | 83% |
| 35°F | 15°F | 55°F | 106% | 103% | 105% | 104% | - | 105% | - | 94% | - |
| | | 80°F | 98% | 98% | 96% | 98% | - | 101% | - | 87% | - |
| | | 95°F | 92% | 91% | 91% | 92% | - | 95% | - | 78% | 87% |
| 50°F | 30°F | 55°F | 105% | 102% | 102% | 103% | - | 103% | - | 91% | - |
| | | 80°F | 95% | 94% | 91% | 95% | - | 98% | - | 81% | - |
| | | 95°F | 93% | 93% | 90% | 93% | - | 96% | - | 80% | - |
| Average of All Conditions | | | 98% | 96% | 96% | 97% | 87% | 99% | 92% | 85% | 85% |

**Table 8**

| Expansion Valve Adjustments Impact on Performance | | | | | |
|---|---|---|---|---|---|
| Refrigerant | Condition | Superheat | Mass Flow | Capacity | COP |
| R-404A | 0°F / 95°F | 12.5 | 354.6 145% | 14846 91% | 0.96 83% |
| R-404A | 35°F / 95°F | 9.8 | 253.2 135% | 12198 92% | 1.38 87% |
| R-407C | 0°F / 95°F | 8.5 | 221.4 90% | 14215 88% | 1.08 93% |
| R-407C | 0°F / 75°F | 10.5 | 213.8 86% | 15087 85% | 1.22 92% |
| R-407A | -15°F / 95°F | 4.9 | 153.0 90% | 9047 80% | 0.82 89% |
| R-407A | 0°F / 95°F | 10.0 | 225.0 92% | 13000 80% | 0.99 85% |

Condition means chamber/outdoor temperature

**Table 9**

| Refrigerant name | Composition (wt%) 32/125/134a Except 404A 125/143a/134a | Superheat 4 to 8°F (corresponding range from claim) | Capacity Relative to R-22 (%) | COP Relative to R-22 (%) | Mass Flow Relative to R-22 (%) |
|---|---|---|---|---|---|
| 407B | 10/70/20 | 10.8 | 82.0 | 88.8 | 114.8 |
| 407D | 15/15/70 | -7.4 | 98.3 | 107.0 | 101.2 |
| 407E | 25/15/60 | -3.9 | 97.0 | 104.9 | 92.3 |
| i) Box Temperature =-15°F ii) Evaporator Temperature = -30°F iii) Outdoor Temperature = 95°F | | | | | |

**Table 10**

| Refrigerant name | Composition (wt%) 32/125/134a Except 404A 125/143a/134a | Superheat 8 to 12°F (corresponding range from claim) | Capacity Relative to R-22 (%) | COP Relative to R-22 (%) | Mass Flow Relative to R-22 (%) |
|---|---|---|---|---|---|
| 407B | 10/70/20 | 17.3 | 80.2 | 82.9 | 114.1 |
| 407D | 15/15/70 | -3.1 | 91.9 | 102.2 | 96.5 |
| 407E | 25/15/60 | 1.2 | 94.0 | 100.0 | 91.6 |
| i) Box Temperature = 0°F ii) Evaporator Temperature = -15°F iii) Outdoor Temperature = 95°F | | | | | |

R-407A and R-407C's performance at first glance looks acceptable but the R-22 expansion valve fails to operate satisfactorily over the operating range thereby not providing the required superheat (rise in temperature) without modification of the refrigeration system. This necessitates, at a minimum, an adjustment of this expansion valve component to increase the superheat. The "Adj TXV" columns and Table 8 shows the performance impact of such an adjustment. Capacity and COP are affected resulting in significantly lower performance than R-22 and the LT blends. R-407C's capacity drops to only 88% of R-22's at the critical design point. Likewise R-407A has significantly lower capacity. R-404A's original performance showed too great a superheat so the expansion valve was adjusted to lower the superheat. The performance improved but still remained considerably below that of R-22 and the LT blends. It should be noted that the adjusted TXV data for R-407A at 0°F / 95°F was extrapolated from actual test data at lower superheats (5.2 to 6.6°F).

The test results in Table 9 measure the operating characteristic of superheat, cooling capacity, COP and mass flow rate for the prior art compositions R-407B, R-407D and R-407E, wherein the box temperature is -15°F, the evaporator temperature is -30°F and the outdoor Temperature is 95°F. R-407B exhibits significantly lower performance relative to R-22 (see capacity and COP parameters). R-407D and R-407E both allow liquid to leave the evaporator at low temperature (noted by negative superheat numbers). Table 10 shows the measurement of the same characteristics but in this instance the box temperature is 0°F and the evaporator temperature is -15°F. Again, R-407B exhibits significantly lower performance relative to R-22. R-407D and R-407E allows liquid to leave the evaporator at low temperature (negative superheat value). The superheat value of R407E is positive in this instance but should be in the range of about 4° to about 8°F for moderately low temperatures (e.g. 0°F Box or Freezer Temperature). The data in Tables 9 and 10 shows that these prior art compositions are not able to maintain acceptable superheat levels and acceptable refrigeration capacity over the entire range of moderate to low temperature refrigeration.

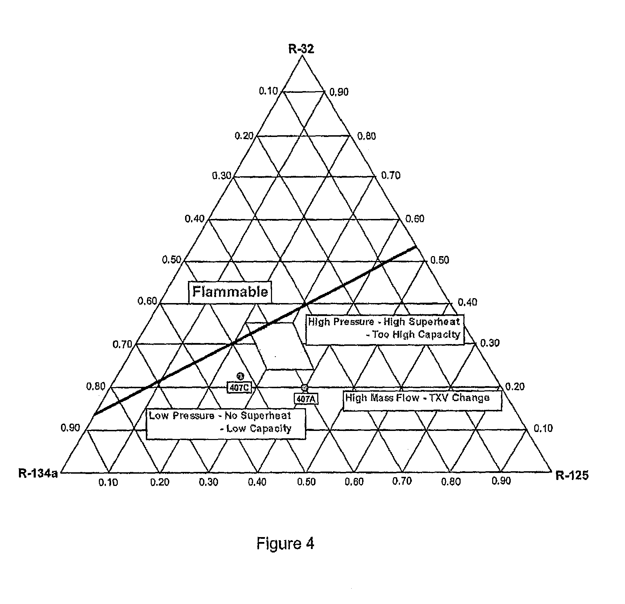

Figure 4 shows the range of the components of the ternary compositions of this invention in the diamond shaped area in the graph and illustrates reasons why this range has considerable advantages over compositions outside this range designated by the dots for R-407A and R-407C. Moving up the graph from the diamond shaped area of the invention results in too great an R-32 concentration and can result in high pressures, high superheat, and flammability issues. Moving down and to the left of the diamond shaped area of the invention in the graph results in low pressures, low capacity, and lack of superheat heat using expansion valves designed for R-22. Moving to the right of the diamond shaped area of the invention in the graph results in higher mass flows and higher pressure and the necessity to replace the expansion valve with a new one designed for these conditions. The graph also illustrates the nearby prior art compositions (R-407 A and R-407C) that do not produce the required nearly identical match with the operating characteristics of R-22 that the compositions of this invention produce.

The compositions according to present invention are acceptable refrigerant compositions for replacing R-22 refrigerant compositions in both moderate and low temperature refrigerant applications and systems. These compositions are able to maintain acceptable superheat levels and acceptable refrigeration capacity over the entire range of moderate to low temperature refrigeration. In contrast, the prior art compositions, including the R 404A, R 407A and R 407C compositions, do not possess the ability to provide acceptable refrigeration at both moderate and low temperature refrigeration as they are unable to provide acceptable superheat levels and refrigeration capacity.

While the invention has been described herein with reference to the specific embodiments thereof, it will be appreciated that changes, modification and variations can be made without departing from the spirit and scope of the inventive concept disclosed herein. Accordingly, it is intended to embrace all such changes, modification and variations that fall with the spirit and scope of the appended claims.

Numbered Embodiments

Numbered Embodiment 1

A process for producing low temperature refrigeration in a low temperature refrigeration system suitable for use with chlorodifluoromethane (HCFC-22) refrigerant that achieves and maintains an evaporator temperature of below 32°F (0°C), about 14°F or below, about 5°F or below, or about -22°F or below, the process comprising condensing a refrigerant and thereafter evaporating the refrigerant in the vicinity of a body to be cooled, wherein the refrigerant composition comprises from about 25 to about 35 mass % difluoromethane (HFC-32), from about 20 to about 40 mass % pentafluoroethane (HFC-125), and from about 35 to about 45 mass % tetrafluoroethane (HFC-134a) whereby these three components are present in the refrigerant composition such that the operating characteristic of superheat provided during refrigeration is in the range of from about 8° to about 16°F (about 4.4 to about 8.9°C) for an evaporation temperature range of about 15 to 30°F (about -9 to -1°C), in the range of from about 8° to about 12° F (about 4.4° to about 6.7°C) for an evaporation temperature of about -15°F (about -26°C), or in the range of from about 4° to about 8°F (about 2.2° to about 4.4°C) for an evaporation temperature of about -30°F (about -34°C), and the operating characteristics of the refrigerant composition in regard to cooling capacity, efficiency (COP), and mass flow, when employed as the refrigerant in the refrigeration system, are each at least about 90%, preferably at least about 95%, of those operating characteristics if chlorodifluoromethane (HCFC-22) were to be employed as the refrigerant in said refrigeration system at identical refrigeration conditions.

Numbered Embodiment 2

A low temperature refrigeration system suitable for use with chlorodifluoromethane (HCFC-22) refrigerant, the low temperature refrigeration system being capable of producing low temperature refrigeration achieving and maintaining an evaporator temperature of below 32°F (0°C), about 14°F or below, about 5°F or below, or about -22°F or below, the system comprising a condenser, an evaporator and a refrigerant composition, wherein the refrigerant composition comprises from about 25 to about 35 mass % difluoromethane (HFC-32), from about 20 to about 40 mass % pentafluoroethane (HFC-125), and from about 35 to about 45 mass % tetrafluoroethane (HFC-134a) whereby these three components are present in the refrigerant composition such that the operating characteristic of superheat provided during refrigeration would be in the range of from about 8° to about 16°F (about 4.4 to about 8.9°C) for an evaporation temperature range of about 15 to 30°F (about -9 to -1°C), in the range of from about 8° to about 12° F (about 4.4° to about 6.7°C) for an evaporation temperature of about -15°F (about -26°C), or in the range of from about 4° to about 8°F (about 2.2° to about 4.4°C) for an evaporation temperature of about -30°F (about -34°C), and the operating characteristics of the refrigerant composition in regard to cooling capacity, efficiency (COP), and mass flow, when employed as the refrigerant in the refrigeration system, would each be at least about 90%, preferably at least about 95%, of those operating characteristics if chlorodifluoromethane (HCFC-22) were to be employed as the refrigerant in said refrigeration system at identical refrigeration conditions.

The subject matter encompassed by the following numbered embodiments also forms part of the present invention, optionally in combination with the subject matter described above and/or defined in any claims that follow.

Numbered Embodiments

Numbered Embodiment 1

A composition comprising:

a) 28-32 wt% difluoromethane (HFC-32);

b) 28-32 wt% pentafluoroethane (HFC-125); and

c) 38-42 wt% tetrafluoroethane (HFC-134a).

Numbered Embodiment 2

A composition according to numbered embodiment 1, wherein the components a), b) and c) comprise substantially the entire composition.

Numbered Embodiment 3

A composition according to numbered embodiment 1 or 2, comprising:

a) about 30 wt% difluoromethane (HFC-32);

b) about 30 wt% pentafluoroethane (HFC-125); and

c) about 40 wt% tetrafluoroethane (HFC-134a).

Numbered Embodiment 4

Use of a composition according to any one of numbered embodiments 1-3 as a refrigerant.

Numbered Embodiment 5

A process for producing low temperature refrigeration in a low temperature refrigeration system, said process comprising the steps of:

a) condensing a composition according to any one of numbered embodiments 1-3; and

b) evaporating the composition in the vicinity of a body to be cooled,

wherein the evaporator temperature of the refrigeration system is below 32°F.

Numbered Embodiment 6

A process according to numbered embodiment 5, wherein the evaporator temperature of the refrigeration system is about 14°F or below, about 5°F or below, or about -22°F or below.

Numbered Embodiment 7

A process according to numbered embodiment 5 or 6, wherein the composition has an operating characteristic of superheat during refrigeration of at least 2°F.

Numbered Embodiment 8

A process according to numbered embodiment 9, wherein the composition has an operating characteristic of superheat during refrigeration in the range of:

a) from about 8°F to about 16°F for an evaporator temperature range of about 15°F to about 30°F.

b) from about 8°F to about 12°F for an evaporator temperature of about 15°F; and/or

c) from about 4°F to about 8°F for an evaporator temperature of about -30°F.

Numbered Embodiment 9

A process according to any one of numbered embodiments 5-8, wherein the refrigeration system is suitable for use with chlorodifluoromethane (HFC-22) and the composition according to any one of the claims 1-3 is substituted for HFC-22 in the system.

Numbered Embodiment 10

A low temperature refrigeration system comprising a condenser, an evaporator and a refrigerant composition according to any one of numbered embodiments 1-3, wherein the evaporator temperature of the refrigeration system is below 0°C.

Numbered Embodiment 11

A system according to numbered embodiment 10, wherein the evaporator temperature of the refrigeration system is about 14°F or below, about 5°F or below, or about -22°F or below.

Numbered Embodiment 12

A system according to numbered embodiments 10 or 11, wherein the composition has an operating characteristic of superheat during refrigeration of at least 2°F.

Numbered Embodiment 13

A system according to numbered embodiment 12, wherein the composition has an operating characteristic of superheat during refrigeration in the range of:

a) from about 8°F to about 16°F for an evaporator temperature range of about 15°F to about 30°F;

b) from about 8°F to about 12°F for an evaporator temperature of about 15°F; and/or

c) from about 4°F to about 8°F for an evaporator temperature of about -30 °F.

Numbered Embodiment 14

A system according to any one of numbered embodiments 10-13, wherein the refrigeration system is suitable for use with chlorodifluoromethane (HFC-22) and the composition according to any one of numbered embodiments 1-3 is substituted for HFC-22 in the system.

**Claims**

1. A process for producing refrigeration in a refrigeration system, said process comprising the steps of:

    i) condensing a refrigerant composition comprising (a) about 30 wt% difluoromethane (HFC-32), (b) about 30 wt% pentafluoroethane (HFC-125), and (c) about 40 wt% tetrafluoroethane (HFC-134a); and
    ii) evaporating said refrigerant composition in the vicinity of a body to be cooled, wherein the evaporator temperature of the refrigeration system is below 0°C (32°F), and wherein said refrigerant composition has an operating characteristic of superheat during refrigeration in the range of:

        a) from 4.4°C (8°F) to 8.9°C (16°F) for an evaporator temperature range of
        -9.4°C (15°F) to -1.1 °C (30°F);
        b) from 4.4°C (8°F) to 6.7°C (12°F) for an evaporator temperature of about
        -26.1°C (-15°F); or
        c) from 2.2°C (4°F) to 4.4°C (8°F) for an evaporator temperature of about
        -34.4°C (-30°F).

2. A process according to claim 1, wherein the evaporator temperature of the refrigeration system is -10°C (14°F) or below.

3. A process according to claim 1, wherein the evaporator temperature of the refrigeration system is -15°C (5°F) or below.

4. A process according to claim 1, wherein the evaporator temperature of the refrigeration system is -30°C (-22°F) or below.

5. A process according to claim 1, wherein the evaporator temperature of the system is in the range of below 0°C (32°F) to -34.4°C (-30°F), preferably below 0°C (32°F) to -30°C (-22°F).

6. A process according to any preceding claim, wherein the refrigeration system is suitable for use with chlorodifluoromethane (HFC-22) and the refrigerant composition is subsituted for HFC-22 in the system.

7. A process according to any preceding claim, wherein the body to be cooled is a food, and preferably the food is cooled to -23.3°C (-10°F) or below.

8. A process according to any preceding claim, wherein the refrigeration system is a freezer.

9. A refrigeration system comprising a condenser and an evaporator, wherein the evaporator temperature of the refrigeration system is below 0°C, and wherein the refrigeration system contains a refrigerant composition as defined in claim 1.

10. A system according to claim 9, wherein the evaporator temperature of the refrigeration system is -10°C (14°F) or below, preferably -15°C (5°F) or below, and more preferably -30°C (-22°F) or below.

11. A system according to claim 9, wherein the evaporator temperature of the system is in the range of below 0°C (32°F) to -34.4°C (-30°F), preferably below 0°C (32°F) to -30°C (-22°F).

12. A system according to any one of claims 9 to 11, wherein the refrigeration system is suitable for use with chlorodifluoromethane (HFC-22) and a refrigerant composition as defined in claim 1 is substituted for HFC-22 in the system.

**13.** A system according to any one of claims 9 to 12, which is a freezer.

**14.** Use of a refrigerant composition comprising (a) about 30 wt% difluoromethane (HFC-32), (b) about 30 wt% pentafluoroethane (HFC-125), and (c) about 40 wt% tetrafluoroethane (HFC-134a), as a replacement for chlorodifluoromethane (HFC-22) in a process for producing low temperature refrigeration in a refrigeration system, said process comprising the steps of :

   i) condensing said refrigerant composition; and
   ii) evaporating said refrigerant composition in the vicinity of a body to be cooled, wherein the evaporator temperature of the refrigeration system is below 0°C (32° F).

**15.** A use according to claim 14, wherein said refrigerant composition has an operating characteristic of superheat during refrigeration in the range of:

   a) from 4.4°C (8°F) to 8.9°C (16°F) for an evaporator temperature range of
   -9.4°C (15°F) to -1.1 °C (30°F);
   b) from 4.4°C (8°F) to 6.7°C (12°F) for an evaporator temperature of about
   -26.1°C (-15°F); or
   c) from 2.2°C (4°F) to 4.4°C (8°F) for an evaporator temperature of about
   -34.4°C (-30°F).

*FIG. 1*

FIG. 2

FIG. 3

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5185094 A
- US 5370811 A
- US 5438849 A
- US 5643492 A
- US 5709092 A
- US 5722256 A
- US 6018952 A
- US 6187219 B1
- US 6606868 B1
- US 6669862 B1
- US 200400691091 A1
- EP 0430169 A1
- EP 0509673 A1
- EP 0811670 A1
- US 6526764 B